(19) Europäisches Patentamt
European Patent Office
Office européen des brevets

(11) Veröffentlichungsnummer: **0 000 765**
**B1**

(12) **EUROPÄISCHE PATENTSCHRIFT**

(45) Veröffentlichungstag der Patentschrift: **17.06.81**

(51) Int. Cl.³: **C 08 L 59/04, C 08 J 3/14**

(21) Anmeldenummer: **78100565.7**

(22) Anmeldetag: **01.08.78**

(54) **Verfahren zur Herstellung von körnigen Oxymethylenpolymeren mit verbesserten mechanischen Eigenschaften.**

(30) Priorität: **10.08.77 DE 2735946**

(43) Veröffentlichungstag der Anmeldung:
**21.02.79 Patentblatt 79/4**

(45) Bekanntmachung des Hinweises auf die Patenterteilung:
**17.06.81 Patentblatt 81/24**

(84) Benannte Vertragsstaaten:
**BE DE FR GB LU NL**

(56) Entgegenhaltungen:
DE - A - 2 452 736
DE - A - 2 452 737
DE - A - 2 504 482
DE - A - 2 508 886
DE - A - 2 509 924
DE - A - 2 620 017

(73) Patentinhaber: **HOECHST AKTIENGESELLSCHAFT**
**Postfach 80 03 20**
**D-6230 Frankfurt/Main 80 (DE)**

(72) Erfinder: **Burg, Karlheinz, Dr.**
**Eichenweg 18**
**D-6200 Wiesbaden (DE)**
Erfinder: **Heller, Alwin**
**Fasanenweg 2**
**D-6106 Erhausen (DE)**
Erfinder: **Sabel, Hans-Dieter, Dr.**
**Ostring 24**
**D-6231 Schwalbach/Taunus (DE)**
Erfinder: **Schlaf, Helmut, Dr.**
**Gimbacher Weg 20**
**D-6233 Kelkheim (Taunus) (DE)**
Erfinder: **Sextro, Günter, Dr.**
**Erbsenacker 43**
**D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 765 B1

# Verfahren zur Herstellung von körnigen Oxymethylenpolymeren mit verbesserten mechanischen Eigenschaften

Die Herstellung von Oxymethylenpolymeren (POM) durch Copolymerisation von Formaldehyd oder cyclischen Oligomeren des Formaldehyds, insbesondere 1,3,5-Trioxan, mit geeigneten Comonomeren, insbesondere cyclischen Äthern oder cyclischen Acetalen, ist bekannt (vgl. z.B. US—Patentschriften 30 27 352 und 38 03 094). Es ist ferner bekannt, daß man körnige Oxymethylenpolymere erhält, wenn mann eine Lösung von Oxymethylenpolymeren in ein Fällungsmittel einbringt, dessen Temperatur knapp unter der Sintertemperatur des Oxymethylenpolymeren liegt (vgl. US—Patentschrift 33 71 066).

Ferner ist bekannt, körnige Oxymethylenpolymere, die neben Oxymethyleneinheiten 0,1 bis 20 Gewichtsprozent Oxyalkyleneinheiten mit 2 bis 8 benachbarten Kohlenstoffatomen in der Hauptkette enthalten, dadurch herzustellen, daß eine 3- bis 35gewichtsprozentige Lösung oder eine feine Dispersion eines Oxymethylenpolymeren in einem Methanol/Wasser-Gemisch mit einem Methanolgehalt von mindestens 75 Gewichtsprozent, deren Temperatur 5 bis 65°C oberhalb der Sintertemperatur des Oxymethylenpolymeren liegt, in ein als Kühlmittel dienendes Methanol/Wasser-Gemisch mit einem Methanolgehalt von mindestens 75 Gewichtsprozent, das in turbulenter Bewegung und auf einer Temperatur von 1 bis 10°C unterhalb der Sintertemperatur des Oxymethylenpolymeren gehalten wird, eingeleitet wird, wobei die Menge des ausgefällten Oxymethylenpolymeren in der entstandenen Suspension höchstens 25 Gewichtsprozent beträgt, und das erhaltene körnige Oxymethylenpolymere anschließend abgetrennt und getrocknet wird (vgl. deutsche Offenlegungsschrift 25 08 886).

Die vorliegende Erfindung betrifft nun eine weitere Ausbildung des letztgenannten Verfahrens und ist dadurch gekennzeichnet, daß die durch Ausfällung erhaltenen körnigen Oxymethylenpolymer-Partikel mit einem Korndurchmesser von mehr als 70 $\mu$m abgetrennt und getrocknet werden. Die Erfindung betrifft ferner körnige Oxymethylenpolymere, die nach dem vorgenannten Verfahren hergestellt sind.

Aus den deutschen Offenlegungsschriften 2 504 482 und 2 509 924 war gleichfalls schon ein Verfahren zur Herstellung von körnigen Oxymethylenpolymeren bekannt. Jedoch wird nach diesen Verfahren zweistufig abgekühlt, nämlich zunächst von 5 bis 65°C oberhalb der Sintertemperatur des Polymeren auf 0 bis 10°C oberhalb der Sintertemperatur und danach auf 1 bis 10°C unterhalb der Sintertemperatur. Außerdem erfolgt keine Abtrennung der Partikelfraktion mit einer Teilchengröße über 70 $\mu$m. Es war nicht zu erwarten gewesen, daß aufgrund der erfindungsgemäßen Separierung und des Einsatzes nur der Grobkornfraktion mit Partikeldurchmessern von mehr als 70 $\mu$m eine Erhöhung der Schlagzähigkeit zu erreichen sein würde und daß dieser Effekt so ausgeprägt ist (vgl. die nachfolgende Tabelle mit den darin enthaltenen Vergleichswerten).

Unter Oxymethylenpolymeren im Sinne der Erfindung werden Poly(oxymethylene) verstanden, die in der Hauptvalenzkette neben Oxymethyleneinheiten noch 0,1 bis 20, vorzugsweise 0,5 bis 10 Gewichtsprozent Oxyalkyleneinheiten mit 2 bis 8, vorzugsweise 2, 3 oder 4 benachbarten Kohlenstoffatomen aufweisen; besonders geeignet sind Oxymethylenpolymere, deren Anteil an Oxyalkyleneinheiten 0,7 bis 5 Gewichtsprozent beträgt.

Die Oxymethylenpolymeren werden in bekannter Weise durch Polymerisation der Monomeren in Masse, Suspension oder Lösung in Gegenwart kationisch wirksamer Katalysatoren z.B. bei einer Temperatur von 0 bis 100°C, vorzugsweise 50 bis 90°C, hergestellt (vgl. z.B. US—Patentschrift 30 20 352). Hierbei werden als kationisch wirksame Katalysatoren (1) Protonsäuren, z.B. Perchlorsäure, (2) Ester von Protonsäuren, insbesondere Ester der Perchlorsäure mit niederen aliphatischen Alkoholen, z.B. Perchlorsäure-tert. butylester, (3) Anhydride von Protonsäuren, insbesondere gemischte Anhydride der Perchlorsäure und einer niederen aliphatischen Carbonsäure, z.B. Acetylperchlorat, (4) Lewis-Säuren, insbesondere Halogenide von Bor, Zinn, Titan, Phosphor, Arsen und Antimon, z.B. Bortrifluorid, Zinntetrachlorid, Titantetrachlorid, Phosphorpentachlorid, Phosphorpentafluorid, Arsenpentafluorid und Antimonpentafluorid und (5) Komplexverbindungen oder salzartige Verbindungen von Lewis-Säuren, vorzugsweise Ätherate oder Oniumsalze, z.B. Bortrifluoriddiäthylätherat, Bortrifluorid-di-n-butylätherat, Triäthyloxoniumtetrafluoroborat, Trimethyloxoniumhexafluorophosphat, Triphenylhexafluoroarsenat, Acetyltetrafluoroborat, Acetylhexafluorophosphat und Acetylhexafluoroiarsenat, verwendet.

Die Menge der bei der Copolymerisation eingesetzten Katalysatoren ist vor allem von der Stärke ihrer Wirksamkeit abhängig; im allgemeinen werden die Katalysatoren in einer Gewichtsmenge von 0,1 bis 2000, vorzugsweise 0,2 bis 500 ppm, bezogen auf die Gesamtmenge der zu polymerisierenden Verbindungen, verwendet. Gut wirksame Katalysatoren wie Bortrifluorid werden zweckmäßigerweise in einer Gewichtsmenge von 10 bis 150, vorzugsweise 20 bis 100 ppm, bezogen auf die Gesamtmenge der zu polymerisierenden Verbindungen, eingesetzt. Für Komplexverbindungen oder salzartige Verbindungen der gennanten Katalysatoren gelten die entsprechenden molaren Mengen. Sehr stark wirksame Katalysatoren wie Perchlorsäure werden in einer Menge von 0,2 bis 10 ppm, vorzugsweise 0,3 bis 5 ppm, verwendet.

Im allgemeinen empfiehlt es sich, die Katalysatoren in verdünnter Form anzuwenden. Gasformige Katalysatoren werden, mit einem Inertgas, z.B. Stickstoff oder einem Edelgas wie Argon, verdünnt, während flüssige oder feste Katalysatoren in einem inerten Lösungsmittel gelost werden. Als Lösungsmittel sind insbesondere aliphatische oder cycloaliphatische Kohlenwasserstoffe sowie nitrierte aliphatische oder aromatische Kohlenwasserstoffe geeignet. Als Beispiele seien genannt: Cyclohexan, Methylenchlorid, Äthylenchlorid, Nitromethan und Nitrobenzol. Das Gewichtsverhältnis von Katalysator zu Verdünnungsmittel beträgt üblicherweise 1:5 bis 1:10 000, vorzugsweise 1:10 bis 1:100 Sehr stark wirksame Katalysatoren werden zweckmäßigerweise im Verhältnis von 1:5 000 bis 1:20 000 verdünnt.

Die Durchführung des Polymerisationsverfahrens erfolgt vorzugsweise unter einer Inertgasatmosphäre und unter Ausschluß von Feuchtigkeit; als Inertgas sind vorzugsweise Edelgase, z.B. Argon, und Stickstoff geeignet.

Als Verbindungen, die mit Trioxan copolymerisierbar sind, eignen sich vor allem a) cyclische Äther mit 3, 4 oder 5 Ringgliedern, vorzugsweise Epoxide, b) cyclische Acetale, vorzugsweise Formale, mit 5 bis 11, vorzugsweise 5, 6, 7 oder 8 Ringgliedern und c) lineare Polyacetale, vorzugsweise Polyformale.

Als Comonomere für Trioxan sind besonders Verbindungen der Formel

$$\underbrace{CH_2 - [CR^1H]_x - [O-(CR^2H)_z]_y - O}$$

geeignet, in der (A) $R^1$ und $R^2$ gleich oder verschieden sind und jeweils ein Wasserstoffatomen, einen aliphatischen Alkylrest mit 1 bis 6, vorzugsweise 1, 2, 3 oder 4 Kohlenstoffatomen oder einen Phenylrest bedeuten und a) x gleich 1, 2 oder 3 und y gleich Null ist oder b) x gleich Null, y gleich 1, 2 oder 3 und z gleich 2 ist oder c) x gleich Null, y gleich 1 und z gleich 3, 4, 5 oder 6 ist, oder (B) $R^1$ einen Alkyloxymethylrest mit 2 bis 6, vorzugsweise 2, 3 oder 4 Kohlenstoffatomen oder einen Phenoxymethylrest bedeutet, wobei x gleich 1 und y gleich Null ist und $R^2$ die obengenannte Bedeutung hat.

Als cyclische Äther werden z.B. Äthylenoxid, Propylenoxid, Styroloxid, Cyclohexenoxid, Oxacyclobutan und Phenylglycidyläther eingesetzt, während als cyclische Formale beispielsweise 1,3-Dioxolan, 1,3-Dioxan, 1,3-Dioxepan und 1,3,6-Trioxocan sowie 4-Methyl-1,3-dioxolan, 4-Phenyl-1,3-dioxolan, 1,3-Dioxonan und 1,3-Dioxacyclohepten-(5) verwendet werden. Als lineare Polyformale eignen sich vor allem Poly (1,3-dioxolan) und Poly (1,3-dioxepan).

Fur die Herstellung von Oxymethylenpolymeren mit bestimmten Molekulargewichtsbereichen ist es zweckmäßig, die Polymerisation in Gegenwart eines Reglers durchzuführen. Hierfür eignen sich vor allem Formaldehyddialkylacetale mit 3 bis 9, vorzugsweise 3, 4, oder 5 Kohlenstoffatomen, z.B. Formaldehyddimethylacetal, -diäthylacetal, -dipropylacetal und -dibutylacetal, sowie niedere aliphatische Alkohole, vorzugsweise Alkanole mit 1 bis 4 Kohlenstoffatomen, z.B. Methanol, Äthanol, Propanol und Butanol. Der Regler wird üblicherweise in einer Menge bis zu 0,5 Gewichtsprozent, vorzugsweise von 0,005 bis 0,1 Gewichtsprozent, bezogen auf die Gesamtmenge der zu polymerisierenden Verbindungen, eingesetzt.

Die Oxymethylenpolymeren werden zu Entfernung instabiler Anteile zweckmäßigerweise einem thermischen, kontrollierten, partiellen Abbau bis zu primären Alkoholendgruppen unterworfen (vgl. US—Patentschriften 31 74 948, 32 19 623 und 36 66 714). Die thermische Behandlung erfolgt bei einer Temperatur von 130 bis 200°C, vorzugsweise 140 bis 190°C, insbesondere unter nicht sauren Bedingungen in wäßrig/methanolischer Lösung, zweckmäßigerweise in Gengewart einer basisch reagierenden Verbindung, z.B. eines niedrigen tertiären aliphatischen Amins wie Triäthyl- oder Triäthanolamin oder eines sekundären Alkaliphosphats wie Dinatriumhydrogenphosphat. Besonders günstig ist eine Temperatur von 150 bis 180°C. Die Dauer der thermischen Behandlung beträgt in Abhängigkeit von der Temperatur 10 Sekunden bis 2 Stunden, vorzugsweise 1 Minute bis 60 Minuten. Je höher die Temperatur ist, desto kürzer kann die Verweilzeit bemessen werden. Bei 180°C genügen etwa 1 bis 2 Minuten, bei 160°C etwa 5 bis 10 Minuten, bei 150°C etwa 10 bis 30 Minuten und bei 140°C etwa 20 bis 60 Minuten. Die Behandlung erfolgt vorzugsweise unter weitgehendem Ausschluß von Sauerstoff.

Als Ausgangsmaterial für das erfindungsgemäße Verfahren wird eine Lösung oder eine Dispersion eines Oxymethylenpolymeren verwendet, deren Polymeranteil 3 bis 35, vorzugsweise 5 bis 30 Gewichtsprozent beträgt. Sehr gute Ergebnisse werden mit einer Polymerlösung oder -dispersion erhalten, die 10 bis 20 Gewichtsprozent Oxymethylenpolymere enthält.

Als Lösungsmittel oder Dispersionsmittel dient ein Methanol/Wasser-Gemisch mit einem Methanolgehalt von mindestens 75 Gewichtsprozent; vorzugsweise wird ein Gemisch verwendet, das aus 99,9 bis 80 Gewichtsprozent Methanol und 0,1 bis 20 Gewichtsprozent Wasser besteht. Besonders vorteilhaft ist ein Gemisch aus 99,5 bis 85 Gewichtsprozent Methanol und 0,5 bis 15 Gewichtsprozent Wasser, wobei die besten Ergebnisse mit einem Gemisch aus 99 bis 90 Gewichtsprozent Methanol und 1 bis 10 Gewichtsprozent Wasser erhalten werden.

Die Temperatur der Lösung oder Dispersion liegt 5 bis 65°C, vorzugsweise 10 bis 60°C oberhalb der Sintertemperatur des Oxymethylenpolymeren, wobei der Temperaturbereich von 25 bis 55°C oberhalb der Sintertemperatur besonders vorteilhaft ist.

Als Kühlmittel und Fällungsmittel dient ebenfalls ein Gemisch aus Methanol und Wasser, dessen Zusammensetzung im gleichen Bereich liegt wie die der vorgenannten Lösungsoder Dispersionsmittels. Das Kühlmittel weist eine Temperature von 1 bis 10°C, vorzugsweise 1 bis 5°C, insbesondere 2 bis 4°C unterhalb der Sintertemperatur des Oxymethylenpolymeren auf. Die Menge des ausgefällten Oxymethylenpolymeren in der durch das Einleiten der Polymer-Lösung oder -Dispersion entstehenden Suspension ist maximal 25, vorzugsweise 5 bis 15 Gewichtsprozent.

Das im Rahmen dieser Erfindung eingesetzte Methanol kann bis zu 30, vorzugsweise bis zu 10 Gewichtsprozent in Methanol lösliche organische Verunreinigungen enthalten, die üblicherweise bei der Synthese von Oxymethylenpolymeren als Nebenprodukte entstehen, z.B. Formaldehyd, cyclische Oligomere des Formaldehyds, Methylal, Glykol, Glykolformal, Glykolmonomethyläther, Glykoldimethyläther sowie niedere aliphatische Alkohole, niedere aliphatische Ester und Aceton.

Als Sintertemperatur ($T_s$) wird die Temperatur bezeichnet, bei der die in den Methanol/Wasser-Gemischen suspendierten festen Polymerpartikel an der Oberfläche weich werden und verkleben, ohne vollständig zu schmelzen. Die Sintertemperatur ist abhängig von Zusammensetzung und Molekulargewicht des Polymeren sowie auch von der Art des Lösungsoder Dispersionsmittels. Die Sintertemperatur der erfindungsgemäß verwendeten Oxymethylenpolymeren liegt im Bereich von 100 bis 140°C, insbesondere von 125 bis 135°C.

Das erfindungsgemäße Verfahren wird beispielsweise in einem mit Rührer versehenen Autoklaven durchgeführt. In diesem Autoklaven wird das Kühl- und Fällungsmittel vorgelegt, und die Lösung oder Dispersion des Oxymethylenpolymeren wird zweckmäßigerweise durch ein beheiztes Tauchrohr oder eine Düse in das Fällungsmittel eingeleitet, wobei letzteres durch Rühren in turbulenter Bewegung gehalten wird. Das Verfahren kann diskontinuierlich oder kontinuierlich durchgeführt werden; bei kontinuierlicher Durchführung wird die erhaltene Polymersuspension am Boden des Autoklavs in dem Maße abgenommen wie die Lösung oder Dispersion sowie gegebenenfalls zusätzliches Fällungsmittel zugegeben werden. Die mittlere Verweilzeit des Oxymethylenpolymeren im Fällungsgefäß beträgt 1 Minute bis 12 Stunden, vorzugsweise 2 bis 120 Minuten. Je nach der im Einzelfall angewandten Temperatur beträgt der Druck 5 bis 40, vorzugsweise 8 bis 30 bar.

Bei der Abkühlung der POM-Lösung oder -Dispersion entstehen durch Fällung oder Agglomeration feste Polymerpartikel mit unterschiedlicher Korngröße. Die Hauptmenge der erhaltenen POM-Partikel besteht aus körnigen Teilchen mit einem Korndurchmesser von mehr als 70 $\mu$m, während eine geringe Menge aus feinkörnigen Teilchen mit einem Korndurchmesser von vorzugsweise weniger als 50 $\mu$m besteht (Siebanalyse). Die körnigen Teilchen weisen vorzugsweise Korndurchmesser von 100 bis 1000 $\mu$m und insbesondere von 150 bis 400 $\mu$m auf. Die Menge des abzutrennenden feinkörnigen Produktes beträgt im allgemeinen weniger als 20 Gewichtsprozent, bezogen auf die Gesamtmenge an festen Polymerpartikeln; der Feinkornanteil liegt vorzugsweise unter 15 und insbesondere bei 3 bis 10 Gewichtsprozent.

Aus der durch das Abkühlen erhaltenen Suspension, die gegebenenfalls weiter auf eine Temperatur von unterhalb 100°C, vorzugsweise auf 20 bis 60°C abgekühlt wird, werden die POM-Partikel mit Teilchendurchmesser von oberhalb 70 $\mu$m durch übliche Trennverfahren, z.B. durch Filtrieren, Zentrifugieren oder Dekantieren, abgetrennt. Aus dem verbleibenden Gemisch können die POM-Partikel mit Teilchendurchmesser von weniger als 70 $\mu$m mit Hilfe eines Separators entfernt werden, und das Lösungsmittel kann als flüssiges Kühlmittel wiederverwendet werden. Das abgetrennte Oxymethylenpolymere wird schließlich bei einer Temperatur von 20 bis 135°C, vorzugsweise von 50 bis 120°C getrocknet. Die Trocknung unter Inertgasatmosphäre, z.B. unter Edelgas- oder Stickstoff-Atmosphäre, ist empfehlenswert.

Auch ist es möglich, die Gesamtmenge der festen Polymerpartikel von der Flüssigkeit abzutrennen und die Trennung nach Partikelgröße während oder nach der Trocknung durchzuführen, z.B. durch Windssichten oder Sieben.

Die erfindungsgemäß erhaltenen körnigen Oxymethylenpolymeren sind makromolekular; die Werte ihrer reduzierten spezifischen Viskosität (RSV) betragen 0,3 bis 2,0, vorzugsweise 0,5 bis 1,5 dl/g (gemessen an einer 0,5 gewichtsprozentigen Lösung des Polymeren in $\gamma$-Butyrolacton, das 2 Gewichtsprozent Diphenylamin als Stabilisator enthält, bei einer Temperatur von 140°C). Die Kristallitschmelzpunkte der Oxymethylenpolymeren liegen im Bereich von 140 bis 180°C, ihre Schmelzindexwerte (MFI 190/2) betragen 0,1 bis 50, vorzugsweise 1 bis 30 g/10 min (gemessen nach DIN 53 735 bei einer Temperatur von 190°C und einer Belastung von 2,16 kg). Das Schüttgewicht der erfindungsgemäß erhaltenen körnigen Oxymethylenpolymeren beträgt im allgemeinen mehr als 300, vorzugsweise 350 bis 550 g/l (ermittelt an dem unter Stickstoff bei einer Temperatur von 70°C getrockneten Polymeren nach einer zweiminütigen homogenen Durchmischung in einem Labor-Fluidmischer bei einer Drehzahl von 3000 UpM). Die RSV-Werte der abgetrennten feinkörnigen Produkte liegen unterhalb 0,3 dl/g und betragen vorzugsweise 0,05 bis 0,25 und insbesondere 0,1 bis 0,2 dl/g.

Die erfindungsgemäß erhaltenen Oxymethylencopolymeren können zusätzlich stabilisiert werden, indem sie mit Stabilisatoren gegen den Einfluß von Wärme, Sauerstoff und/oder Licht homogen vermischt werden. Die Homogenisierung erfolgt üblicherweise in einer handelsüblichen Mischvorrichtung, z.B. einem Extruder, bei einer Temperatur oberhalb des Schmelzpunktes des Polymeren bis zu 250°C, vorzugsweise bei 180 bis 210°C. Die Menge der zugesetzten Stabilisatoren beträgt insgesamt 0,1 bis 10, vorzugsweise 0,5 bis 5 Gewichtsprozent, bezogen auf das Gesamtgemisch.

Als Stabilisatoren eignen sich vor allem Bisphenolverbindungen, Erdalkalisalze von Carbonsäuren

sowie Guanidinverbindungen. Als Bisphenolverbindungen werden hauptsächlich Ester von ein- oder zweifach mit einem 1 bis 4 Kohlenstoffatome enthaltenden Alkylrest kernsubstituierten einbasigen 4-Hydroxyphenylalkansäuren, die 7 bis 13, vorzugsweise 7,8 oder 9 Kohlenstoffatome enthalten, mit aliphatischen zwei-, drei- oder vierwertigen Alkoholen, die 2 bis 6, vorzugsweise 2,3 oder 4 Kohlenstoffatome enthalten, verwendet, z.B. Ester der ω-(3-Tert.-butyl-4-hydroxy-phenyl)-pentansäure, β-(3-Methyl-5-tert.-butyl-4-hydroxy-phenyl)-propionsäure, (3,5-Ditert.-butyl-4-hydroxyphenyl)-essigsäure, β-(3,5-Di-tert.-butyl-4-hydroxyphenyl)-propionsäure oder (3,5-Di-isopropyl-4-hydroxyphenyl)-essigsäure mit Äthylenglykol, Propandiol-(1,2), Propandiol-(1,3), Butandiol-(1,4), Hexandiol-(1,6), 1,1,1-Trimethyloläthan oder Pentaerythrit.

Als Erdalkalisalze von Carbonsäuren werden insbesondere Erdalkalisalze von aliphatischen, vorzugsweise hydroxylgruppenhaltigen, ein-, zwei- oder dreibasigen Carbonsäuren mit 2 bis 20, vorzugsweise 3 bis 9 Kohlenstoffatomen verwendet, z.B. die Calcium- oder Magnesiumsalze der Stearinsäure, Rizinolsäure, Milchsäure, Mandelsäure, Apfelsäure oder Zitronensäure.

Als Guanidinverbindungen werden Verbindungen der Formel

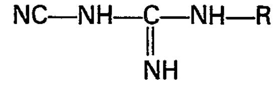

verwendet, in der R ein Wasserstoffatom, eine Cyanogruppe oder einen Alkylrest mit 1 bis 6 Kohlenstoffatomen bedeutet, z.B. Cyanoguanidin, N-Cyano-N'-methyl-guanidin, N-Cyano-N'-äthyl-guanidin, N-Cyano-N'-iso-propylguanidin, N-Cyano-N'-tert.-butyl-guanidin oder N,N'-Dicyanoguanidin. Die Guanidinverbindung wird gegebenenfalls in einer Menge von 0,01 bis 1, vorzugsweise 0,02 bis 0,5 Gewichtsprozent, bezogen auf das Gesamtgemisch, eingesetzt.

Ferner können den erfindungsgemäß hergestellten Oxymethylenpolymeren noch bekannte Lichtstabilisatoren wie Benzophenon-, Acetophenon- oder Triazinderivate zugesetzt werden. Andere übliche Zusätze wie Farbstoffe, Pigmente, Verstärkungs- und Füllstoffe oder Nukleierungsmittel können ebenfalls zugegeben werden.

Die Erfindungsgemäß erhaltenen Oxymethylenpolymeren sind dadurch gekennzeichnet, daß sie gegenüber bekannten Oxymethylenpolymeren verbesserte mechanische Eigenschaften, insbesondere Zähigkeitseigenschaften, aufweisen. Sie lassen sich durch alle für thermoplastische Kunststoffe üblichen Verfahren verarbeiten, z.B. durch Spritzgießen, Strangpressen, Extrusionsblasen, Schmelzspinnen und Tiefziehen. Sie eignen sich als Material zur Herstellung von Halbzeug und Fertigteilen wie Formkörpern, z.B. Barren, Stäben, Platten, Bändern, Borsten, Fäden, Fasern, Filmen, Folien, Rohren und Schläuchen, sowie Haushaltsartikeln, z.B. Schalen und Bechern, und Maschinenteilen, z.B. Gehäusen und Zahnrädern. Sie sind vor allem als technischer Werkstoff zur Herstellung von dimensionsstabilen und maßhaltigen Formteilen verwendbar.

Die folgenden Beispiele erläutern die Erfindung. Hierbei bedeutet "%" jeweils "Gewichtsprozent" und "Teile" jeweils "Gewichtsteile".

## Beispiel 1 bis 9

Unterschiedliche Teile eines Copolymeren aus 98% Trioxan und 2% Äthylenoxid mit einem RSV-Wert von 0,76 oder 0,81 dl/g und einem MFI (190/2) von 9 oder 7 g/10 min werden unter Stickstoff mit 100 Teilen eines Methanol/Wasser-Gemisches gemischt, das 500 ppm Triäthylamin enthält. Das erhaltene Gemisch wird 5 min lang auf eine Temperatur von 170°C erhitzt, wobei das Polymere in Lösung geht.

Diese Lösung wird innerhalb von 30 min durch ein Tauchrohr in 30 Teile eines Methanol/Wasser-Gemisches gleicher Zusammensetzung eingeleitet, das sich in einem Autoklaven in turbulenter Bewegung befindet und eine Temperatur von 125°C (Beispiel 2: 129°C) aufweist. Bei einer Sintertemperatur des Polymeren von 127°C (Beispiel 2: 131°C) liegt die Temperatur des Fällungsmittels damit 2°C unterhalb der Sintertemperatur. Nach weiteren 10 min wird die erhaltene Suspension auf Raumtemperatur abgekühlt.

Eine Hälfte der Suspension wird über ein feinporiges Filter gegeben, das eine quantitative Abscheidung des Feststoff-Anteils erlaubt (Polymer A). Die verbliebene zweite Häfte der Suspension wird durch Zentrifugieren mit Hilfe einer Siebzentrifuge (Siebweite 70 μm) in Feststoffanteile mit Partikeldurchmesser oberhalb 70 μm (Polymer B) und kleiner (Polymer C, in Filtrat) aufgetrennt. Aus dem Zentrifugat wird dann das feinteilige Polymer C mit Hilfe eines Separators entfernt.

Die Trocknung der Produkte A und B erfolgt bei 70°C unter Stickstoff. An den getrockneten Produkten werden dann die Schüttgewichte und RSV-Werte bestimmt. Ein Teil der Produkte wird anschließend mit Stabilisatoren versetzt (0,1% Dicyandiamid; 0,5% Bis(2-hydroxy-3-tert.butyl-5-methylphenyl)-methan) und durch Spritzgießen zu Probekörpern verarbeitet.

Das Schlagverhalten wird nach DIN 53 443 im Fallbolzenversuch geprüft. Hierfür werden quadratische Platten mit einer Kantenlänge von 60 mm und einer Dicke von 2 mm sowie ein Fallbolzen mit einem Gewicht von 100 g verwendet; die Ringöffnung der Auflagefläche beträgt -abweichend von der Norm — 25 mm. Die ermittelte Fallhöhe ist ein Maß für die Zähigkeit des Materials.

Weitere Einzelheiten und Ergebnisse sind aus der folgenden Tabelle ersichtlich.

TABELLE

| Beispiel | Ausgangspolymer | | Lösungs- (= Fallungs-) mittel Methanol/Wasser (Gew.–%) | Polymer A (Vergleich) | | Polymer B (Erfindung) | | | Polymer C (Feinkörnig) | |
|---|---|---|---|---|---|---|---|---|---|---|
| | RSV (dl/g) | Konz. in Lösung (Gew.–%) | | RSV (dl/g) | Fallhöhe (cm) | RSV (dl/g) | Fallhöhe (cm) | Schütt-gewicht (g) | RSV (dl/g) | Anteil (Gew.–%) |
| 1 | 0,76 | 15 | 80/20 | 0,74 | 115 | 0,79 | 160 | 310 | 0,23 | 17 |
| 2 | 0,76 | 15 | 95/ 5 | 0,76 | 110 | 0,81 | 140 | 430 | 0,11 | 8 |
| 3 | 0,76 | 7,5 | 90/10 | 0,75 | 110 | 0,81 | 155 | 320 | 0,22 | 19 |
| 4 | 0,76 | 10 | 90/10 | 0,75 | 105 | 0,78 | 150 | 350 | 0,18 | 15 |
| 5 | 0,76 | 15 | 90/10 | 0,77 | 100 | 0,80 | 140 | 370 | 0,17 | 12 |
| 6 | 0,76 | 20 | 90/10 | 0,74 | 110 | 0,78 | 145 | 370 | 0,21 | 11 |
| 7 | 0,76 | 25 | 90/10 | 0.72 | 110 | 0,80 | 145 | 360 | 0,14 | 7 |
| 8 | 0,76 | 30 | 90/10 | 0,73 | 105 | 0,79 | 160 | 390 | 0,09 | 11 |
| 9 | 0,81 | 10 | 90/10 | 0,80 | 95 | 0,83 | 145 | 340 | 0,18 | 17 |

## Patentansprüche

1. Verfahren zur Herstellung eines körnigen Oxymethylenpolymeren, das neben Oxymethyleneinheiten 0,1 bis 20 Gewichtsprozent Oxyalkyleneinheiten mit 2 bis 8 benachbarten Kohlenstoffatomen in der Hauptkette enthält, durch Einleiten einer 3 — 35 gewichtsprozentigen Lösung oder Dispersion des Oxymethylenpolymeren in einem Methanol/Wasser-Gemisch mit einem Methanolgehalt von mindestens 75 Gewichtsprozent, deren Temperatur 5 bis 65°C oberhalb der Sintertemperatur des Oxymethylenpolymeren liegt, in ein turbulent bewegtes Methanol/Wasser-Gemisch mit einem Methanolgehalt von mindestens 75 Gewichtsprozent, das auf einer Temperatur von 1 bis 10°C unterhalb der Sintertemperatur des Oxymethylenpolymeren gehalten wird und Ausfällen des Oxymethylenpolymeren, wobei die Menge des ausgefällten Oxymethylenpolymeren in der entstandenen Suspension höchstens 25 Gewichtsprozent beträgt, und anschließendes Abtrennen und Trocknen des erhaltenen körnigen Oxymethylenpolymeren, dadurch gekennzeichnet, daß solche Oxymethylenpolymer-Partikel abgetrennt und getrocknet werden, die einen Korndurchmesser von mehr als 70 $\mu$m aufweisen.

2. Verfahren nach Anspruch 1, dadurch gekennzeichnet, daß die abgetrennten und getrockneten Partikel einen Korndurchmesser von 100 bis 1 000 $\mu$m aufweisen.

## Revendications

1. Procédé de préparation d'un poly-(oxyméthylène) grenu qui renferme, en plus de motifs oxyméthylènes, de 0,1 à 20% en poids de motifs oxy-alkylènes contenant de 2 à 8 atomes de carbone voisins dans la chaîne principale, par introduction d'une dispersion ou solution à 3—35% en poids du poly-(oxyméthylène) dans un mélange de méthanol et d'eau dont la teneur en méthanol est d'au moins 75% en poids et dont la température est supérieure de 5 à 65°C à la température de frittage du poly-(oxyméthylène), dans un mélange de méthanol et d'eau en mouvement turbulent dont la teneur en méthanol est d'au moins 75% en poids et qui est maintenu à une température inférieure de 1 à 10°C à la température de frittage de poly-(oxyméthylène), et précipitation du poly-(oxyméthylène), la quantité du poly-(oxyméthylène) précipité dans la suspension formée étant d'au plus 25% en poids, puis séparation et séchage du poly-(oxyméthylène) grenu obtenu, procédé caractérisé en ce qu'on sépare et sèche celles des particules de poly-(oxyméthylène) qui ont un diamètre de grain supérieur à 70 $\mu$m.

2. Procédé selon la revendication 1, caractérisé en ce que les particules séparées et séchées ont un diamètre de grain de 100 à 1000 $\mu$m.

## Claims

1. Process for the preparation of a granular oxymethylene polymer containing besides oxymethylene units from 0.1 to 20% by weight of oxyalkylene units having from 2 to 8 adjacent carbon atoms in the main chain, by introducing a 3 to 35% by weight solution or dispersion of the oxymethylene polymer in a methanol/water mixture having a methanol content of at least 75% by weight, the temperature of which solution or dispersion being from 5 to 65°C above the sintering temperature of the oxymethylene polymer, into a methanol/water mixture having a methanol content of at least 75% by weight which is kept in turbulent motion and at a temperature of from 1 to 10°C below the sintering temperature of the oxymethylene polymer, and precipitating the oxymethylene polymer, in which process the amount of the precipitated oxymethylene polymer in the suspension formed is at most 25% by weight, and by subsequently separating and drying the granular oxymethylene polymer obtained, which comprises separating and drying those oxymethylene polymer particles which show a grain diameter of more than 70 $\mu$m.

2. Process as claimed in claim 1, wherein the separated and dried particles show a grain diameter of from 100 to 1,000 $\mu$m.